# EUROPEAN PATENT APPLICATION

(11) **EP 3 248 944 A1**
(43) Date of publication of application: **29.11.2017**
(21) Application number: 16425045.8
(22) Date of filing: 24.05.2016
(51) Int. Cl.: C02F 1/00, C02F 1/40, E03F 1/00, E03F 5/10, C02F 101/32

(54) **MONITORING AND MANAGEMENT STATION FOR RUNOFF WATER**

(71) Applicant: Cooperativa Edile Appennino Societa' Cooperativa a Responsabilita' Limitata, 40063 Monghidoro (BO) (IT)
(72) Inventor: Lorenzini, Dante, 40063 Monghidoro BO (IT)
(74) Representative: Modiano, Micaela Nadia

(57) **Abstract**

A monitoring and management station (1) for runoff water of the type collected and channeled by way of drains and ducts (2) which have an end outflow mouth (3) which comprises, downstream of the end outflow mouth (3), at least one distribution tank (4), at least one accumulation tank (5), at least one deoiler (7) and at least one sampling assembly (8). The distribution tank (4) has at least two exit channels (9, 10) of which at least one first channel (9) leads to the accumulation tank (5) and at least one second channel (10) leads to a downflow circuit (11). The accumulation tank (5) comprises at least one main exit (12) and at least one secondary exit (14, 15) which leads to containers for storing residues separated from the water. The main exit (12) leads to the deoiler (7) which in turn comprises a first dispensing channel (19) which leads to an oil accumulation container (20) and a second dispensing channel (22) which leads to the at least one sampling assembly (8) which in turn leads into the stormwater drain network (A).

## Description

The present invention relates to a monitoring and management station for runoff water (for example first rain water and water from spills), in particular for the treatment of rainwater that has fallen on a certain stretch of road or, more generically, on a surface with a high degree of impermeabilization such as a covering, an asphalted yard or a stretch of road, collected and channeled thereon and therefore incorporating residues and pollutants (such as for example the remains of hydrocarbons).

The activity carried out on such surfaces or the continuous circulation of vehicles on the roads implies the deposit of residues and pollutants: in particular there will be an accumulation of dust (owing to abrasion of tires, to losses of small quantities of transported loads, to the voluntary/involuntary release of debris, etc) and of pollutants of a different nature (in particular oils, hydrocarbons and the like).

When it rains, the residues will be washed away by the rain and channeled, through channeling and collection drains to facilitate the downflow thereof.

Since they contain a high level of pollutant substances, the channeled liquids cannot be freely introduced into nearby watercourses, and instead they have to be appropriately treated for the purification thereof.

Only through the adoption of purification systems will it therefore be possible to treat the collected and channeled water, in order to eliminate the pollutant content.

The purification system must be designed to handle huge volumes of water and, for this reason, it will be particularly expensive.

By contrast, the washing-away of the residues and pollutants from the road surface is ascribable only to an initial period of rain: after a certain amount of time the water that is collected and channeled will no longer comprise a hazardous level of residues and pollutants (which have already been washed away by the rain that fell earlier), and therefore it can be freely introduced into the aforementioned watercourses without first purifying it.

The water that reaches the treatment system in the initial period of rain (i.e. the water that collects most of the residues and pollutants) is called "first rain" water.

Current regulations require the treatment (purification and/or filtering) of the first rain water, but they do not require any activity to be carried out on the water that is channeled subsequently.

The use is known of mathematical models and of approximate estimates to evaluate how much time must elapse before the collected and channeled water can be sent directly into the watercourses of the area.

Unfortunately such estimates are not reliable and define a high risk of introducing pollutant substances into the watercourses, as well as possibly subjecting substantially clean water to purification treatments.

Moreover, with estimates it is not possible to take account of extraordinary events, such as for example the overturning of tank trucks or generic vessels (with consequent spilling of the load), accidents with loss of fuel, or fires where the fire brigade intervenes with extinguishing foams and/or powders; furthermore, other extraordinary events cannot be ruled out, such as the malicious illegal disposal of pollutant wastes on the surfaces at issue. All these extraordinary events imply the deposition of a quantity of pollutant substances that hugely exceeds the normal quantity and therefore will leave traces in the collected and channeled water for longer than the times estimated with mathematical methods for ordinary situations.

The aim of the present invention is to solve the above mentioned drawbacks, by providing a monitoring and management station for runoff water that makes it possible to exactly evaluate the quantity of pollutants present in the collected and channeled water.

Within this aim, an object of the invention is to provide a monitoring and management station for runoff water that makes it possible to subject only the water containing residues and pollutants in quantities higher than a preset threshold value to filtering and purification treatments.

Another object of the invention is to provide a monitoring and management station for runoff water that is capable of controlling and managing even extraordinary and particularly polluted flows of water.

Another object of the present invention is to provide a monitoring and management station for runoff water that is low cost, easily and practically implemented and safely applied.

This aim and these objects are achieved by a monitoring and management station for runoff water of the type collected and channeled by way of drains and ducts which have an end outflow mouth, characterized in that it comprises, downstream of said end outflow mouth, at least one distribution tank, at least one accumulation tank, at least one deoiler and at least one sampling assembly, said distribution tank having at least two exit channels of which at least one first channel leads to said accumulation tank and at least one second channel leads to a downflow circuit, said accumulation tank comprising at least one secondary exit which leads to containers for storing residues separated from the water and at least one main exit which leads to said deoiler which in turn comprises a first dispensing channel which leads to an oil accumulation container and a second dispensing channel which leads to said at least one sampling assembly which in turn leads into the stormwater drain network.

Further characteristics and advantages of the invention will become better apparent from the detailed description that follows of a preferred, but not exclusive, embodiment of the monitoring and management station for runoff water according to the invention, which is illustrated by way of non-limiting example in the accompanying drawings, wherein:

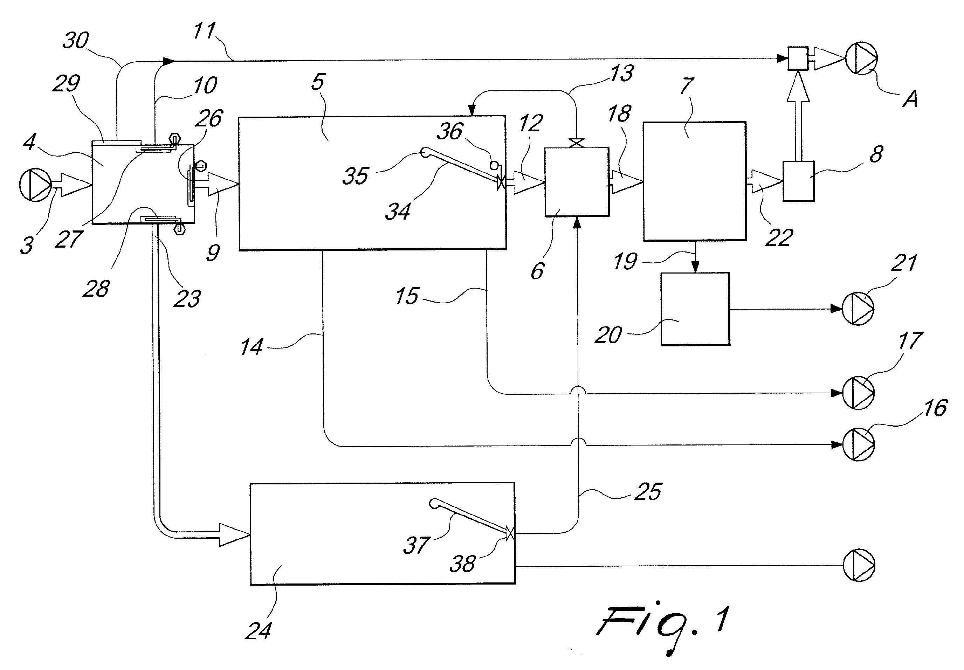

Figure 1 is a block diagram of a monitoring and management station for runoff water according to the invention;
Figure 2 is a view from above of an apparatus for treating runoff water which comprises the monitoring and management station according to the invention;

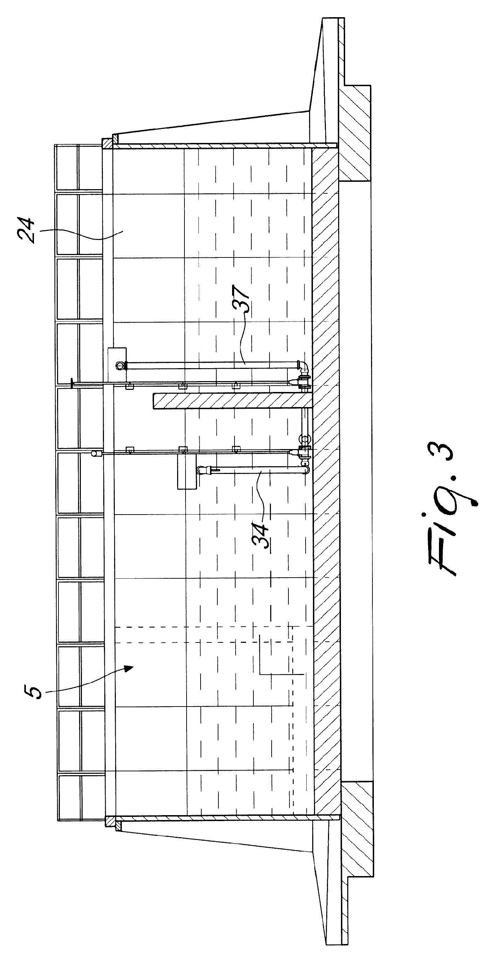

Figure 3 is a cross-sectional view taken along the line III-III in Figure 2;

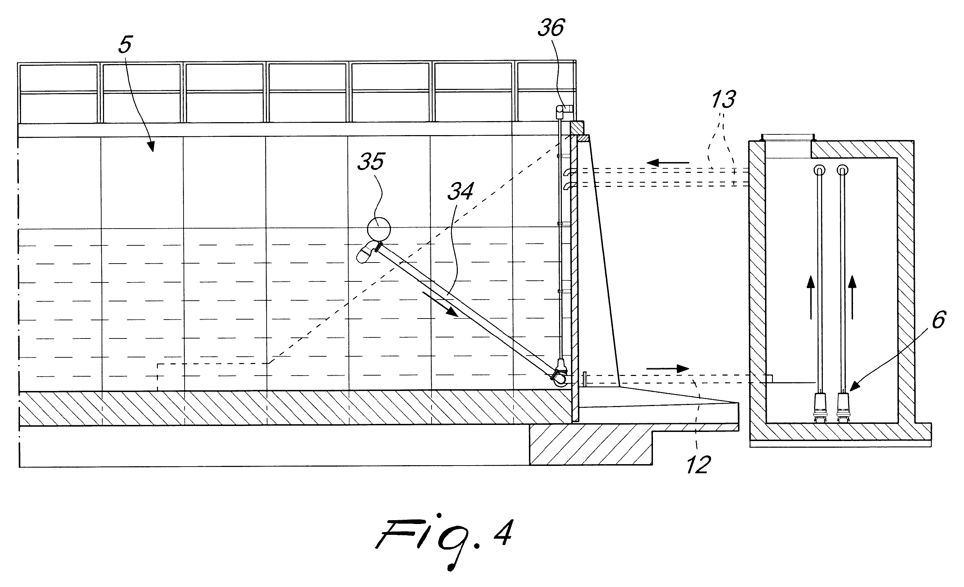

Figure 4 is a cross-sectional view taken along the line IV-IV in Figure 2;

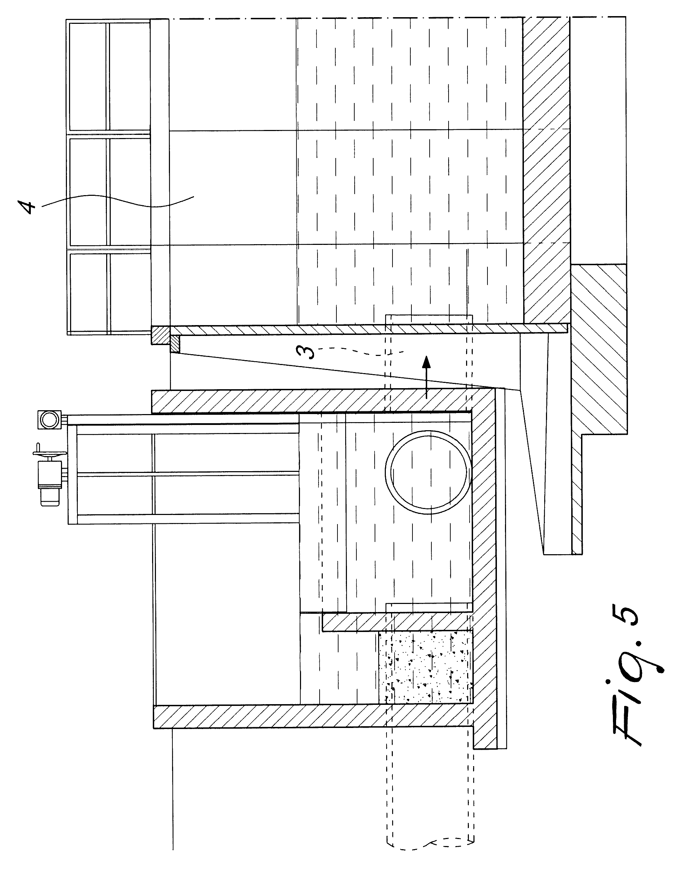

Figure 5 is a cross-sectional view taken along the line V-V in Figure 2;

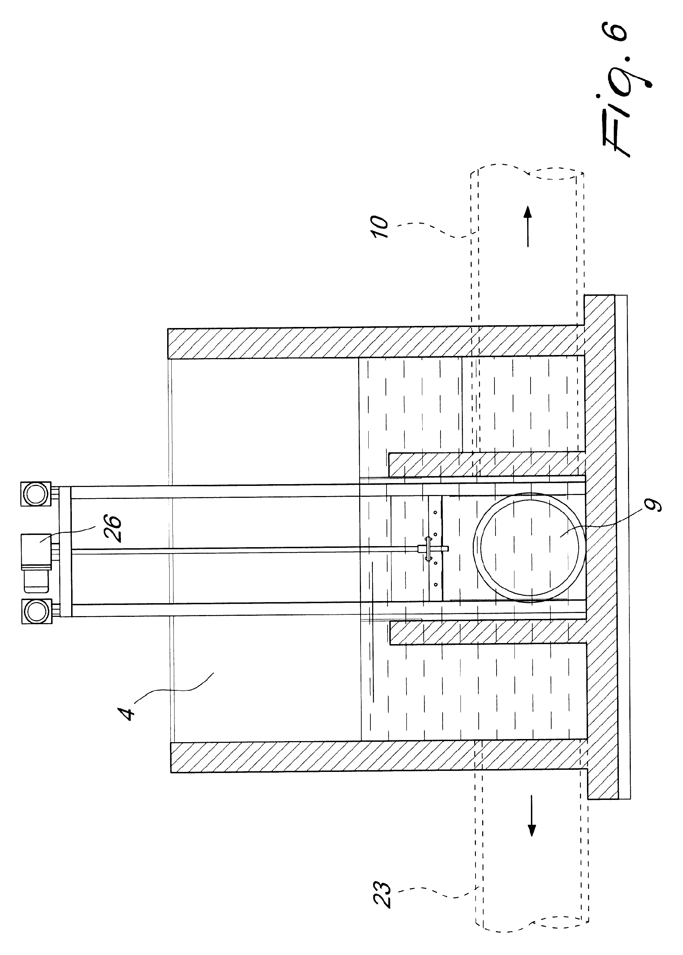

Figure 6 is a cross-sectional view taken along the line VI-VI in Figure 2;

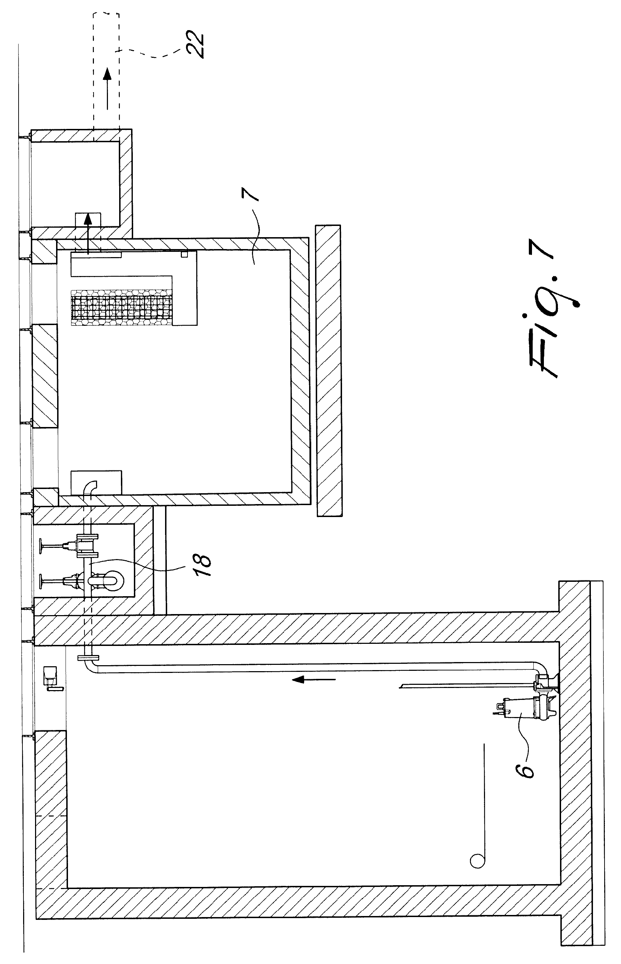

Figure 7 is a cross-sectional view taken along the line VII-VII in Figure 2.

With reference to the figures, the reference numeral 1 generally designates a monitoring and management station for runoff water.

The first rain water is identified as that portion of rainwater which, once it has fallen on the road surface, collects the debris and the pollutant substances that are present therein.

First rain water is defined as the water collected in a predefined initial period from when it starts raining: in fact, after the rain has continued for a certain time, the road surface will have been washed (of debris and pollutant substances) and therefore the water subsequently collected and channeled from the road surface can be considered sufficiently clean to be reintroduced directly into the existing stormwater drain network A.

The monitoring and management station 1 will operate on first rain water, and on water originating from spills occurred on the road surface, collected from a predefined impermeable surface portion (for example a road surface) and channeled, by way of drains and channeling 2, toward an end outflow mouth 3 (which in turn leads to the station 1).

The station 1 comprises, downstream of the at least one end outflow mouth 3, at least one distribution tank 4, at least one accumulation tank 5, a lift tank 6 (the tank 6 is an optional element, useful only when the height of the offtake of liquids from the tank 5 is lower than the height at which they must be delivered to the next component of the station 1), at least one deoiler 7 and at least one sampling area 8 (within which respective probes and other predefined data detection components can be temporarily inserted, the sampling area 8 usually being provided in a specific sampling well).

The distribution tank 4 can positively have at least two exit channels 9, 10.

A first channel 9 leads to the accumulation tank 5 and at least one second channel 10 leads to a downflow circuit 11 for direct introduction into the existing stormwater drain network A.

The accumulation tank 5 further comprises at least one main exit 12 which leads to the deoiler 7, optionally through at least one respective lift tank 6 (optional, necessary only when the heights of the tank 5 and of the deoiler 7 are not consistent, in order to make use of the gravitational fall of the liquids subjected to treatment).

In particular, when these heights are not consistent, the transfer from the accumulation tank 5 to the treatment system occurs by way of submersible pumps contained within the tank 6 (the possibility is not ruled out however that, with particular structural forms of the station, it will be possible to obtain the transfer from the accumulation tank 5 to the treatment system simply by gravity). The pumps have positioning with guide pipes and coupling foot, and they can therefore be extracted and repositioned even when the tank 6 is full. The delivery pipes are independent and this makes it possible to avoid the use of non-return valves and on-off valves. The pipes therefore are emptied when the pumps of the tank 6 stop, preventing problems owing to freezing during winter.

A redundant number of the pumps of the tank 6 can be provided so as to act as a backup to each other, and each one of them therefore has a capacity that exceeds that required.

For the automatic management of the pumps of the tank 6, there are floating level controllers (better explained below) and a control panel which also ensures the swapping of the pumps of the tank 6 at each pump start, and the automatic switchover to another pump of the tank 6 in substitution of one that may be out of service.

The possibility is not excluded of adopting different level sensors, such as piezoelectric, resistive, inductive, capacitive, and the like.

The delivery pipes are provided with a branch 13 which can recirculate the water in the accumulation tank 5.

The tank 5 further comprises at least one secondary exit 14 and 15 which leads to containers 16 and 17 for the storage (and disposal) of residues separated from the water.

The lift tank 6 (when present) comprises an exit 18 which leads to the deoiler 7 (which in cases where the tank 6 is not present will be directly connected to the exit 12 of the tank 5) which in turn comprises a first dispensing channel 19 which leads to an oil accumulation container 20 (which can subsequently be associated with disposal systems 21, such as for example dedicated vehicles) and a second dispensing channel 22 which leads to the at least one sampling assembly 8 which in turn leads to the stormwater drain network A.

According to a particular embodiment of undoubted applicative interest, the distribution tank 4 can positively also comprise at least one third exit channel 23, which leads to a runoff accumulation basin 24 for extraordinary events.

Such accumulation basin 24 (designed to contain waste water from extraordinary events) will advantageously be provided with an exit duct 25 which leads to the deoiler 7, optionally interposing, when necessary, the lift tank 6.

It should further be noted that the distribution tank 4 can positively comprise, for each exit channel 9, 10 and 23, a respective motorized closing sluice valve, respectively 26, 27 and 28.

It should further be noted that the distribution tank 4 or the accumulation tank 5 can comprise a surface drain 29, of the type of an overflow weir, which leads to a branch duct 30 which flows into the downflow circuit 11 for introduction directly into the existing stormwater drain network A.

The surface drain 29, of the type of an overflow weir, is U-shaped in order to maximize its extension and therefore reduce the head during spillover.

From the viewpoint of the control logic, it should be noted that the distribution tank 4 can be functionally associated with a processor which can control at least one rain gauge, at least one level sensor and at least one actuator for moving a respective sluice valve for closing a corresponding exit channel, and with an analysis controller.

The distribution tank 4 will be functionally associated with at least one analysis controller which controls at least one assembly for analyzing the presence of oil in the water, at least one pH reader, at least one electrical conductivity detector and at least one turbidity sensor.

The presence of such sensors and detectors could also make it possible to carry out a continuous examination of the characteristics of the water originating from the mouth 3, in order to be able to specifically distinguish the first rain water (rich in residues and pollutants) from the subsequent runoff water; the presence of such components further makes it possible to identify the arrival of water derived from extraordinary events (for example load losses, dispensing of extinguishing substances to put out fires and the like).

In the application scenario, in conformance with the requirements of current regulations , distinguishing the first rain water is done solely on the basis of the predetermined volume falling when it starts raining, and not on the basis of qualitative data.

In this second application case, the data collected from the sensors and from the detectors will make it possible to determine cycles of different treatments or to assess problems of persistent pollution in "second rain" water as well.

It should be noted that, in order to ensure an optimal operation of the system as a function of the characteristics of the water that arrives through the mouth 3, the processor and the controller will be mutually interconnected.

According to a particular embodiment of undoubted applicative interest, the analysis controller comprises a unit for taking samples of water.

Such unit for taking samples will advantageously be controlled by a pump for transferring the samples to respective analysis cells of that controller; in particular the pumps for taking samples can positively be two in number: a vacuum pump for taking samples with operating times of a few seconds after the sensors have detected the presence of liquid, and a peristaltic pump for taking continuous samples during rainstorms. The double sampling pump will also ensure greater reliability, by way of the redundancy of the pumping system.

With reference to an embodiment of practical interest and simple implementation, the accumulation tank 5 can positively comprise a separating partition 31 in order to define a first accumulation basin 32 for the first rain water and a second accumulation basin 33 for runoff water (i.e. polluted or refluent water) as a consequence of exceptional events.

As an alternative to the embodiment described previously, it should be noted that the accumulation tanks 5 may be at least two in number, at least one first accumulation tank for the first rain water and at least one second accumulation tank for runoff water as a consequence of exceptional events.

It should further be noted that the at least one main exit 12 of the accumulation tank 5 comprises a sluice gate arranged at a preset height, surmounted and controlled by a floating arm 34 for activation.

The floating arm 34 comprises an end float 35: the floating arm 34 keeps the offtake mouth below the water level in the basin.

In such case the float 35 serves solely to ensure the oscillation of the articulated arm so that the offtake mouth arranged under the float follows the level of the tank and constantly draw at about 5 cm or 10 cm below the water surface. The opening of the motorized sluice gate is controlled by the treatment cycle control PLC.

The present invention also extends its protection to a process of managing and monitoring rainwater collected along a stretch of road and channeled by way of drains and channeling 2 which have an end outflow mouth 3.

Such process entails a step in which it is necessary to analyze the water originating from the end outflow mouth 3 at the start of a rainstorm or following a spillage.

In a subsequent step, the incoming liquid passes through a sluice valve 26 (arranged in the open configuration) into an accumulation tank 5, only upon detecting concentrations of pollutant lower than a threshold value in the liquid, with consequent progressive filling of the tank 5.

Upon reaching a volume of liquid introduced into the tank 5 which corresponds to a preset value defined by the regulations in force, the sluice valve 26 is closed.

A consequent step entails holding the sluice valve 26 in the closed configuration for a preset time after it stops raining, allowing the rainwater dispensed from the end outflow mouth 3 to outflow toward a stormwater drain network.

Simultaneously the at least one accumulation tank 5 is isolated in order to subject the liquids collected in the tank 5 to sedimentation (deposition on the bottom of the tank 5 of the residues with a high specific weight, exceeding that of the water) and flotation (floating to the surface of the water in the tank 5 of the residues with a low specific weight, lower than that of the water) for a predefined time interval, with consequent precipitation onto the bottom of sand and other heavy bodies and accumulation at the surface of oils and other substances or bodies that are lighter than water.

Once the predefined time interval is over, an exit sluice gate, controlled by a floating arm 34, is opened onto a main exit 12 which leads to the deoiler 7, optionally with the interposition of a lift tank 6.

The deoiler 7 will preferably be of the coalescence type.

The deoiler 7 will continuously dispense the exiting water into the stormwater drain network A.

The refluent arriving through the channeling 2 (which is constituted, merely for the purposes of non-limiting example, by concrete piping with an inside diameter of 800 mm) arrives in the distribution tank 4 (through the mouth 3) which can positively comprise at least two concentric areas. The refluent arrives directly in the innermost area, which, in an applicative version of undoubted practical and applicative interest shown for the purposes of non-limiting explanation, has three sluice valves 26, 27 and 28:
- the sluice valve 26 is connected to the exit channel 9 which enters the accumulation tank 5 inside which the first rain water is collected;
- the sluice valve 28 is connected to the exit channel 23 which enters the tank 24 for accumulating the refluent deriving from exceptional events (for example spills and operations to extinguish fires);
- the sluice valve 27 is connected to the exit channel 10 which leads to the outer area of the tank from which the by-pass piping 11 starts.

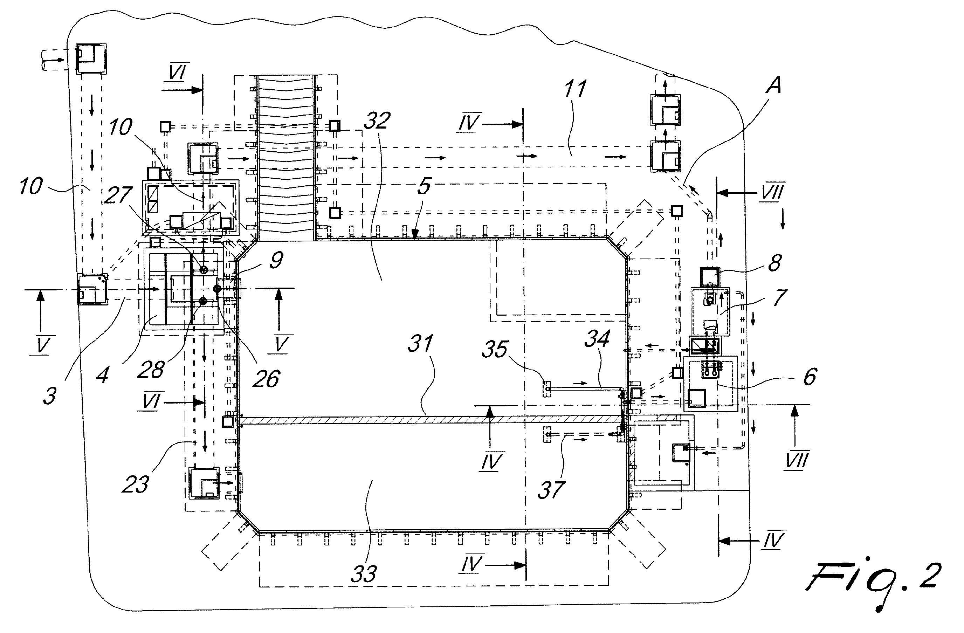

It should be noted that, according to an alternative embodiment, the tank 24 (which in the embodiment in Figure 2 can coincide with the second accumulation basin 33) may not be present. In these cases the tank 5 (which in the embodiment in Figure 2 coincides with the basin 32) will have an additional volume in addition to the volume of the first rain water, which will allow the storage of any spillovers during rainfall.

Depending on the event unfolding and depending on the levels in the tanks 5 and 24, downstream of the tank 4 the corresponding sluice valves 26, 28 will be open. The opening and the closing of these occurs automatically, managed by the controller (previously mentioned).

In particular the sluice valve 26 will remain open until a volume of liquid at least corresponding to that specified by the regulations in force for each rain event has been collected in the tank 5; the sluice valve 28 will be opened when refluent water with particular characteristics arrives, or in the absence of rain. When both of the sluice valves 26 and 28 are closed, the arriving refluent water can completely flood the inner area of the tank 4 and the surface drain 29 makes it possible to overflow (spill over) into the outer area, which in turn is connected to the by-pass piping 11, which channels the water directly to the drain.

Precautions have been taken to decrease the height of the water surface in the latter conditions, in order to limit the levels in the drains and channeling 2 upstream of the station 1, and so favor and accelerate the downflow into the road collection network:
- the surface drain 29 is U-shaped in order to maximize its extension and therefore reduce the head during spillover;
- when the sluice valves 26 and 28 are closed and in any case if the water level inside the distribution tank 4 is too high, the controller opens the third sluice valve 27, which connects the inner area with the outer area, allowing the water to be sent to the second channel 10 which leads to a downflow circuit 11 for introduction directly into the existing stormwater drain network A.

The tank 4 is preferably made of reinforced concrete and is covered with grilles that make it possible both to see inside in order to easily check the situation, and to gain access to the sluice valves 26, 27 and 28.

The sluice valves 26, 27 and 28 are provided both with a drive unit, and with a manual movement element for operation in the absence of electricity. Furthermore, directly on the motor drive there are devices for controlling and managing each sluice valve 26, 27 and 28 electrically, but with manual operation.

The accumulation tank 5 is provided within a special basin made of prefabricated reinforced concrete elements; such tank 5 is intended for storing the first rain water (for example as specified in the local regulations for the Italian region of Emilia Romagna). It will be provided with a fence made of galvanized steel.

The entry to the tank 5 is through the motorized entry sluice valve 26, described in the previous paragraph, and arranged in the distribution tank 4.

The main exit 12 from the tank 5 is through a floating arm 34. This device, by way of a float 35 and an articulated joint, makes it possible to draw off liquid constantly at a height located about 5 cm or 10 cm below the water surface. This makes it possible to avoid drawing off oils, and other floating substances or bodies. Furthermore the downward travel of the offtake mouth of the floating arm 34 (i.e. the travel leading to the main exit 12) is limited by an adapted spacer, which prevents offtake in the lowest part of the tank 5, thus avoiding drawing off the sedimented material.

The main exit 12 also has a motorized shutoff device 36 (a sluice gate), in order to allow maximum automation.

The tank 5 is not only for storage; it also carries out a first step of treatment. In particular, as can be understood from the description of the floating arm 34, it is capable of retaining sand and other material susceptible of sedimentation, oils and floating substances or other floating bodies.

Operation will be completely automated and managed by the controller. In particular, it, by conveniently opening and closing the entry sluice valve 26 and the sluice gate 36 of the floating arm 35, will make it possible to obtain the cycle of treatment specified by the current regulations, which could comprise the following steps:
- when it starts raining, the entry sluice valve 26 is opened and, if the pollutant concentrations found are not characteristic of an extraordinary event with the arrival of unusual refluent, the tank 5 begins to fill up;
- the entry sluice valve 26 is subsequently closed upon reaching the maximum level, or after a configurable time after it started to rain;

- for 72 hours (this time interval is given solely for the purposes of example and refer to a current local regulation; such value will need to be established as a function of the current regulations at the installation location) starting from when it stops raining, any subsequent episodes of rain are not considered a new and different rain event, and therefore the entry sluice valve 26 is kept closed. In such conditions, if there is no arrival of polluted refluent, identified by the analysis controller, which gives cause to assume extraordinary events, the controller proceeds to directly open the by-pass sluice valve 27, which makes it possible to send the flows of "second rain" water directly to the existing stormwater drain network A;
- after the closing of the sluice valve 26, the controller is programmed to ensure the accumulated refluent remains where it is for a certain period. For a configurable time starting from such moment, therefore, the discharge valve 36 will be kept closed and the liquid, in completely calm conditions, is subjected to an efficacious phase of sedimentation and flotation, which allows the precipitation onto the bottom of sand and other heavy bodies, while the oils and other substances or bodies that are lighter than water accumulate at the surface;
- once the sedimentation phase has ended, the discharge valve 36 is opened and, through the floating arm 34, the pretreated liquid is sent to the lift tank 6 or directly to the deoiler 7. As mentioned previously, the floating arm 34 is capable of preventing the outflow of the floating substances and of the sedimented substances;
- the pump installed in the lift tank 6 (or the gravity spouting pipe connected to the articulated arm 34) is provided and programmed to feed the subsequent deoiler 7 (a coalescence deoiling plant) at a controlled flow-rate. The flow-rate is such as to allow the tank 5 to be emptied within a configurable time (merely for the purposes of non-limiting example, 72 hours) after it stops raining, thus ensuring that it is possible to start a new cycle in the event of the arrival of new "first rain" water.

The tank 5, in order to allow the automation of the management described above, will further be provided with a level probe, for example of the piezoresistive type.

The pollutants that accumulate inside the tank 5 over time must be disposed of and sent to authorized centers. In particular the oils and the floating substances will be drawn off with a gully emptier, directly from the surface of the tank 5. For collection of the sedimented material, sand and the like, the tank 5 can be provided with an access ramp that allows the entry of work vehicles of the skid-steer loader type (corresponding to blocks 16 and 17 shown in the accompanying figures), which can be used to collect and load the material once dried after a suitable period in terms of the weather.

The transfer from the accumulation tank 5 to the treatment system can occur by way of submersible pumps. For the installation of the pumps there is an adapted tank, which is connected downstream of the floating arm 34. The dimensions in plan view are adapted to accommodate two pumps; the height of the edge of the tank in which the pumps are placed coincides with that of the accumulation tank 5, while it is slightly deeper in order to allow emptying up to the level of the floating arm 34.

The tank contains two submersible pumps, with vortex impellers, particularly adapted for runoff water, even if it contains sand or corpuscular materials. They have positioning with guide pipes and coupling foot, and they can be extracted and repositioned even when the tank is full and the other pump is in operation. The delivery pipes are independent and this makes it possible to avoid the use of non-return valves and on-off valves. The pipes therefore are emptied when the pumps stop, preventing problems owing to freezing during winter.

The two pumps are a backup to each other, and each one of them therefore has a capacity that exceeds that required.

For the automatic management of the pumps, there are floating level controllers, or level controllers of another type, and a control panel which also ensures the swapping of the pumps at each pump start, and the automatic switchover to another pump in substitution of one that may be out of service.

The lift system within which the pumps act is also connected to the accumulation tank 24 for runoff water from exceptional events.

The delivery pipes are provided with a branch that can recirculate the first rain water in the accumulation tank 5.

The pumps feed a static deoiler 7 which is provided with a coalescence filter. It is constituted by a single-piece tank, for example prefabricated of vibrated reinforced concrete, buried, and containing a baffle made of AISI304 stainless steel and the filtering system, and by a tank for collecting the separated oil.

The deoiler 7 is class 1 (coalescent separator according to the definition in table 1 of the UNI EN 858-1 standard).

The deoiler 7 is connected to the second dispensing channel 22 which leads to the at least one sampling assembly 8 which in turn leads into the stormwater drain network A; the deoiler 7 is provided with an automatic shutoff system which prevents the outflow from the drain pipe of the accumulated oil.

Thus constituted, the deoiler 7 operates as follows:
- the water to be treated enters the deoiler 7 where the solids susceptible of sedimentation which might not have been retained by the accumulation tank 5 are deposited on the bottom while the decanted water and the light substances return to the surface. The clarified water underneath passes through the coalescence filter 7 and enters the dispensing channel 22.

In passing through the filter 7 the oily microparticles that escaped floating and were pulled along by the water aggregate (coalesce), forming larger suspensions that separate rising to the surface.

According to a particular embodiment, as the thickness of the floating layer of oil increases, the level inside the tank of the deoiler 7 increases and the oil accumulated at the surface is automatically drained into a specific oil accumulation tank. When the layer of oil exceeds the limit specified by the standard (section 6.5.2 of the UNI EN 858-1 standard) a float valve closes and the entire flow is diverted to the oil accumulation tank.

If the deoiler 7 is not of the type provided with a respective oil accumulation tank, readings will be taken of the quantity of oil present in the deoiler 7 in order to establish the need for maintenance intervention to remove the oil.

In the oil accumulation area is a level controller which, once a preset volume of oil has been reached, prevents the operation of the pumps and emits an alarm signal.

When the quantity of oil contained in the tank reaches a maximum threshold, steps must be taken to extract the oil by way of a gully emptier and move it off-site.

It is periodically necessary to carry out the backwashing of the filter 7 with running water. Under load conditions that are compatible with its rated size, the deoiler 7 is capable of removing the oily substances present in the water down to a residual oil content of no more than 5 mg/l.

At the exit of the deoiler 7 is a sampling assembly 8 for quality control of the output.

The exit piping from the sampling assembly 8 reconnects with the stormwater drain network A which collects the purified water, together with the "second rain" water.

When the controller detects anomalous situations, such as for example:
- the arrival of liquids when there is no rainfall;
- the checked concentrations of pollutants are higher than the set thresholds;
it opens the specific sluice valve 28 of the distribution tank 4 and the runoff water begins to fill the accumulation tank 24 intended for runoff from exceptional events.

This tank 24 can be provided within the existing basin, made of prefabricated elements in vibrated reinforced concrete, it will be parallel to the first rain water accumulation tank 5, and adjacent thereto, with identical construction characteristics.

When this tank 24 is activated, the controller does not start any purification cycle but only signals an alarm and continues to monitor the levels of the tanks 5 and 24 and the concentrations of the arriving pollutants.

As previously explained above, the station 1 can also be provided in a version in which the tank 24 is absent and its volume is compensated by an increase in the overall volume of the tank 5 and a specific management of the corresponding control and management.

In this case therefore procedures will need to be activated which involve intervention and decision-making of supervision operators who, having evaluated the characteristics of the liquid collected, will decide the actions to be undertaken for the disposal.

In particular, it will need to be decided whether to carry out the disposal with specific means, or whether to send the refluent to the coalescence deoiler 7. This final opportunity, which obviously can be availed of only if the refluent has been deemed correctly treatable in such plant, entails the manual actuation of the drainage system.

The tank 24 in fact is provided with a tilting arm 37 which is similar to that of the first rain water accumulation tank 5, but which is opened and closed by a manually actuated sluice gate 38. It must then be evaluated whether to treat the refluent directly or whether to transfer it to the first rain water tank 5 and treat it together with the latter. In order to perform such maneuvers it is possible, if the levels of the two tanks 5 and 24 permit it, to use the two floating arms 34 and 37; otherwise, the pumps and the exit 12 can be used.

In the preceding paragraph it has already been noted that the pumps which send the first rain water to the deoiler 7 are capable of also being fed with the water collected in the refluent accumulation basin from exceptional events.

The pumps can be fed from two sources (from the first rainwater accumulation tank 5 or from the runoff water accumulation tank 24 for exceptional events) and they can deliver to two destinations:
- to the deoiler 7 with coalescence filter;
- to the first rainwater tank 5.

In fact each one of the two delivery pipes is provided with a branch and with two valves that make it possible to carry out the desired operations.

The pumps are usually configured to feed the deoiler 7 with the first rain water; with manual interventions on the various valves, through the pumps it is also possible:
- start the recirculation of the first rain water inside the corresponding tank 5, in order to create a movement thereof;
- supply the deoiler 7 with water stored in the tank for exceptional events 24;
- transfer the water from exceptional events to the first rain water tank 5.

The heart of the automatic management system of the components is an electronic controller provided with a plurality of sensors and a Programmable Logic Controller (PLC) capable of analyzing the data collected, processing the data in order to identify the current situation, and taking consequent action, actuating the various apparatuses available and transmitting the necessary information.

The controller will be positioned within a prefabricated box made of multilayer panels which is arranged adjacent to the accumulation tanks 5 and 24 and to the distribution tank 4.

The station 1 continuously and automatically carries out the following activities:
1. detection of the presence of rainfall;
2. detection of the presence of liquid in the supply duct of water collected from the road bed;
3. continuously drawing off any liquid present in the duct (for example in the channeling 2);
4. instantaneously verify whether the nature of the liquid detected is conductive or otherwise (e.g. water or oils);
5. stop the sampling assembly in the event of the presence of non-conductive substances;
6. analysis of parameters such as pH, turbidity, hydrocarbons, and conductivity of the sampled liquid;
7. checking for the presence of water in the container holding the sensors;
8. checking if the offtake line is clogged;
9. automatic cleaning with compressed air of the offtake point in programmable cyclic steps;
10. automatic cleaning of the sensors in programmable cyclic steps with emptying of the container and restoration of the wetting water level;
11. keeping the water for wetting the sensors inside the container holding the sensors in downflow;
12. periodic substitution of the water for wetting the sensors in the event of extended situations in which the system remains in standby;
13. checking the status of the level of water for washing in the reserve tank and restoration if necessary with second rain water;
14. monitoring of all the sensitive parameters (alarms, thresholds etc.) and data transmission;
15. management of opening and closing the sluice valves 26, 27, 28 and the isolation valve 36.

In normal conditions the station 1 enters standby mode, with the sampling devices inactive.

The station 1 monitors, through the rain and level sensors, the beginning of the following possible situations:
a) an episode of rainfall;
b) an accidental event while it is not raining;
c) an accidental event while it is raining.

The measurements of the various sensors and the parameters calculated by the controller determine the open and closed state of the shut-off valves (sluice valves 26, 27 and 28 and valve 36) of the tanks 5 and 24.

For the purposes of example, the data that will be made available to any operations centers that are remotely connected to the station 1 will be: presence of rain, presence of electrically-conductive liquid in the channeling 2 with no rainfall present (accidental event with spillage of water or acidic or basic liquids), presence of non-electrically conductive liquid in the channeling 2 with no rainfall present (accidental event with presence of spills of hydrocarbons or other substances other than water), presence of non-conductive liquid in the channeling 2 with rainfall present (accidental event with presence of spill of hydrocarbons or other substances other than water), pH and/or conductivity threshold exceeded (heavy pollution in first rain water, when the phenomenon is associated with the beginning of rainfall), pH and/or conductivity threshold exceeded (accidental event if the phenomenon is associated with the protraction of the rainfall), threshold exceeded for presence of hydrocarbons, threshold exceeded for levels of tanks 5 and 24, measurement instrument malfunction (fault) alarm, offtake pipe clogging alarm, alarm for failure of sample to arrive in the sensor container (peristaltic pump pipe breakage, peristaltic pump motor alarm), out of water for cleaning and wetting sensors alarm, station cabinet door unexpected opening alarm, pump maintenance period exceeded alarm, sensor calibration period exceeded alarm.

Advantageously the present invention solves the above mentioned problems, by providing a monitoring and management station 1 for runoff water that makes it possible to exactly evaluate the quantity of pollutants present in the collected and channeled water.

Conveniently, the monitoring and management station 1 for runoff water makes it possible to subject only the water containing residues and pollutants in quantities higher than a preset threshold value to filtering and purification treatments.

Positively the station 1 is capable of controlling and managing even extraordinary and particularly polluted flows of water.

Advantageously the station is easily and practically implemented and is low cost: such aspects render the present invention an innovation that is safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A monitoring and management station for runoff water of the type collected and channeled by way of drains and ducts (2) which have an end outflow mouth (3), **characterized in that** it comprises, downstream of said end outflow mouth (3), at least one distribution tank (4), at least one accumulation tank (5), at least one deoiler (7) and at least one sampling assembly (8), said distribution tank (4) having at least two exit channels (9, 10) of which at least one first channel (9) leads to said accumulation tank (5) and at least one second channel (10) leads to a downflow circuit (11), said accumulation tank (5) comprising at least one secondary exit (14, 15) which leads to containers for storing residues separated from the water and at least one main exit (12) which leads to said deoiler (7) which in turn comprises a first dispensing channel (19) which leads to an oil accumulation container (20) and a second dispensing channel (22) which leads to said at least one sampling assembly (8) which in turn leads into the stormwater drain network (A).

2. The station according to claim 1, **characterized in that** said distribution tank (4) comprises at least one third exit channel (23), which leads to an accumulation basin (24) for runoff from extraordinary events which is in turn provided with an exit duct (25) which leads to a component which is chosen from between said deoiler and a lift tank (6) interposed between said main exit (12) and said deoiler (7).

3. The station according to one or both of claim 1 and claim 2, **characterized in that** said distribution tank (4) comprises, for each exit channel (9, 10, 23), a respective motorized closing sluice valve (26, 27, 28).

4. The station according to claim 1, **characterized in that** said distribution tank (4) comprises a surface drain (29) which leads to a branch duct (30) which directly leads into the stormwater drain network (A).

5. The station according to claim 1, **characterized in that** said distribution tank (4) is functionally associated with a processor which controls at least one rain gauge, at least one level sensor and at least one actuator for moving a respective sluice valve for closing a respective exit channel, and at least one analysis controller which controls at least one assembly for analyzing the presence of oil in the water, at least one pH reader, at least one electrical conductivity detector and at least one turbidity sensor, said processor and said controller being mutually interconnected.

6. The station according to the preceding claim, **characterized in that** said analysis controller comprises a unit for taking samples of water which is controlled by a pump for transferring the samples to respective analysis cells of said controller.

7. The station according to one or more of the preceding claims, **characterized in that** said accumulation tank comprises a separating partition in order to define a first accumulation basin (5) for the first rain water and a second accumulation basin (24) for runoff water as a consequence of exceptional events.

8. The station according to one or more of the preceding claims and as an alternative to claim 7, **characterized in that** said accumulation tanks (5, 24) are at least two in number, at least one first accumulation tank (5) for the first rain water and at least one second accumulation tank (24) for runoff water as a consequence of exceptional events.

9. The station according to one or more of the preceding claims, **characterized in that** the at least one main exit (12) of said accumulation tank (5) comprises a sluice gate arranged at a preset height, surmounted and controlled by a floating arm (34) for liquid offtake, said floating arm (34) comprising an end float (35).

10. A process of managing and monitoring water collected along a stretch of road and channeled by way of drains and channeling (2) which have an end outflow mouth (3), which consists of:
- analyzing the water originating from said end outflow mouth (3) upon its arrival;
- sending the water, through an entry sluice valve (26) in the open configuration, into an accumulation tank (5) upon detecting concentrations of pollutant lower than a threshold value, with consequent progressive filling of said tank (5);
- closing said sluice valve (26) at a threshold, said threshold being preferably chosen from between a volumetric threshold of liquid introduced and a maximum liquid level threshold in said tank (5);
- maintaining said sluice valve (26) in the closed configuration for a preset time after it stops raining, allowing the rainwater dispensed from the end outflow mouth (3) to outflow toward a stormwater drain network (A);
- isolating said at least one accumulation tank (5) in order to subject the liquids collected in the tank (5) to sedimentation and flotation for a predefined time interval, with consequent precipitation onto the bottom of sand and other heavy bodies, and accumulation at the surface of oils and other substances or bodies that are lighter than water;
- once the predefined time interval is over, opening an exit sluice gate, controlled by a floating arm (34), onto a main exit (12) which leads to a deoiler (7), preferably of the coalescence type which proceeds to continuously dispense water in output from said deoiler (7) into the stormwater drain network (A).
